Europäisches Patentamt

European Patent Office

Office européen des brevets

(19)

(11) Publication number: 0 480 382 A1

# EUROPEAN PATENT APPLICATION

(21) Application number: 91117154.4

(22) Date of filing: 08.10.91

(51) Int. Cl.5: B23P 19/02, F22B 37/00

(30) Priority: 08.10.90 JP 268494/90

(43) Date of publication of application:
15.04.92 Bulletin 92/16

(84) Designated Contracting States:
BE DE ES FR SE

(71) Applicant: MITSUBISHI JUKOGYO KABUSHIKI KAISHA
5-1, Marunouchi 2-chome Chiyoda-ku
Tokyo(JP)

(72) Inventor: Takigawa, Toshimichi, c/o Kobe Shipyard & Engine W

Mitsubishi Jukogyo K.K., 1-1, Wadasaki-cho 1-chome
Hyogo-ku, Kobe-shi, Hyogo-ken(JP)
Inventor: Nakasha, Shusaku, c/o Kobe Shipyard & Engine Works
Mitsubishi Jukogyo K.K., 1-1, Wadasaki-cho 1-chome
Hyogo-ku, Kobe-shi, Hyogo-ken(JP)

(74) Representative: Henkel, Feiler, Hänzel & Partner
Möhlstrasse 37
W-8000 München 80(DE)

(54) Apparatus for removing a mechanical plug secured in an end of a heat transfer tube of a heat-exchanger.

(57) An apparatus for removing a mechanical plug (204) secured in an end of a heat transfer tube (202) of a heat-exchanger, is improved in order that a series of operations for drilling a prepared hole and tapping in a plug to be removed, cutting the circumference of the plug, and extracting the plug can be consecutively executed without exchanging tools. The apparatus comprises a main body (30), a cotter type clamping mechanism (32) for fixing the main body on a tube sheet (200) of the heat-exchanger, and a cutting and removing mechanism (34) for cutting and removing the mechanical plug. The cutting and removing mechanism has a tubular milling cutter (46) and a drilling-tapping tool (52) coaxially arranged in the boring tool and forming a drilling section (54) at an end thereof and a tapping section (56) adjacent to the drilling section. The cotter type clamping mechanism preferably includes a cotter (108) having a smaller diameter section (112) at an upper portion so as to be held in a mechanical plug other than the mechanical plug to be removed, and a larger diameter section (110) at a lower portion so as to be held in a heat transfer tube adjacent to the heat transfer tube within which the mechanical plug to be removed is secured, and a stroke adjustment mechanism (126) for selecting a lifting distance of the clamping mechanism.

Fig. 4

Fig. 3

## BACKGROUND OF THE INVENTION:

### Field of the Invention:

The present invention relates to an apparatus for cutting and removing a mechanical plug secured in an end of a heat transfer tube of a heat-exchanger.

### Description of the Prior Art:

A steam generator in a nuclear power plant or the like includes a large number of heat transfer tubes for performing heat-exchange between primary coolant water and secondary coolant water. There are sometimes used mechanical plugs in order to put damaged ones among these heat transfer tubes out of service. Namely, a mechanical plug is inserted into an end portion of a damaged heat transfer tube, then the plug is expanded under a wedge effect of a cone therein thereby bringing into tight contact with the inner surface of the heat transfer tube and thus the damaged heat transfer tube get sealed off.

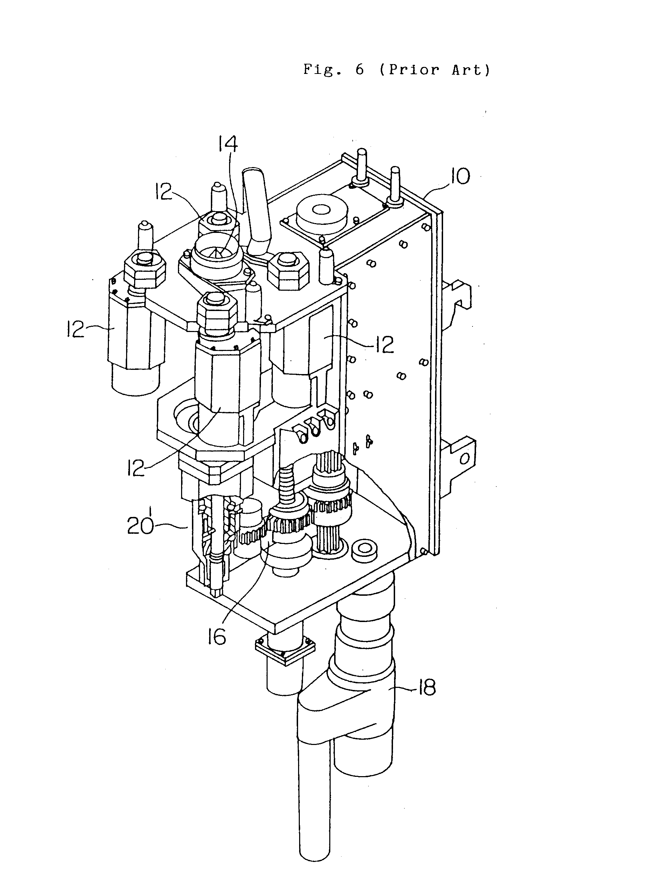

In case of removing the plug secured in the heat transfer tube in the above-described manner, heretofore, a removing apparatus as shown in Fig. 6 has been employed. This removing apparatus is placed under a tube sheet supporting the heat transfer tubes and fixed thereto by means of four pneumatic clamps 12 provided on a main body of the apparatus and a walking type device (not shown). Cutting of the plug is effected by means of a milling cutter 14 rising vertically from the top surface of the apparatus main body 10. The milling cutter 14 is rotated by an air motor 18 via a gear train 16. The milling cutter 14 is rotatably held by a chip breaker holder 20 which is raised and lowered by making use of the torque of the air motor 18, and feed motion of the milling cutter 14 become effective by the lifting motion of the chip breaker holder 20.

In case of carrying out removal of a plug by making use of the removing apparatus, first forming of a prepared hole in the closed end of the plug is effected by means of a small-diameter tool. Subsequently, a threaded hole is formed in the closed end with a tap in place of the tool. Then, after boring to remove a circumferential portion of the plug which is contact with the heat transfer tube has been effected with a large-diameter cutting tool exchanged for the tap, an extracting tool is threadedly engaged with the above-mentioned threaded hole, and then the plug is pulled out from the heat transfer tube. Finally, if necessary, inner surface finishment of the heat transfer tube, and the like are carried out with an appropriate tool chosen out of various ones prepared.

In order to remove a plug by using the conventional removing apparatus as described above, operations such as drilling a prepared hole, forming a threaded hole, main cutting off, extraction of the plug and the like had to be carried out, the exchange of a tool such as a milling cutter or the like was necessary for each operation, and it was very time-consuming and irksome.

In addition, due to the fact that fixing of the conventional removing apparatus was effected by pressing a cotter or the like of a clamp mechanism to an inner surface of a heat transfer tube, fixing of the apparatus can be carried out effectively only in a complete heat transfer tube which has not contained a plug, a sleeve or the like formerly inserted. Accordingly, depending upon the position of the object to be removed, it may be possible that a plug had been secured to a heat transfer tube at a planned position for fixing or clamping, and in such cases, another clamping mechanism had to be provided additionally or the position for clamping had to be changed.

## SUMMARY OF THE INVENTION:

It is therefore a principle object of the present invention to provide an apparatus for removing a plug, which can carry out a series of operations from cutting to removal of the plug without performing exchange of tools at all, and which can be fixed even to a heat transfer tube into which a plug or a sleeve has been inserted.

According to the present invention, there is provided an apparatus for removing a mechanical plug secured in an end of a heat transfer tube of a heat-exchanger, comprising a main body, a cotter type clamping mechanism for fixing the main body on a tube sheet of the heat-exchanger, and a cutting and removing mechanism for cutting and removing the mechanical plug, wherein the cutting and removing mechanism has a tubular milling cutter and a drilling-tapping tool coaxially arranged in the cutting tool and forming a drilling section at an end thereof and a tapping section adjacent to the drilling section.

According to the present invention, there is further provided the above-featured apparatus, wherein the cotter type clamping mechanism includes a cotter having at an upper portion a smaller diameter section which can be firmly held in a mechanical plug other than the objective one to be removed, and at a lower portion a larger diameter section which can be firmly held in a heat transfer tube adjacent to the heat transfer tube which contains the objective mechanical plug, and a stroke adjustment mechanism for selecting a lifting distance of the clamping mechanism.

In the apparatus according to the present invention above, the main body of the apparatus for removing a mechanical plug is fixed to a tube sheet of the heat-exchanger by means of a cotter type clamping mechanism. Once the plug removing apparatus has been fixed to the tube sheet in the above-described manner, the tubular milling cutter and the drilling-tapping tool in the cutting and removing mechanism are driven. The drilling section of the drilling-tapping tool forms a prepared hole at the tip end portion of the plug, and if the drilling-tapping tool is further raised, the tapping section thereof taps in the above-described prepared hole. At the same time, the tubular milling cutter performs main cutting of the plug. Since the tapping section of the drilling-tapping tool is held in a threadedly engaged state with the tip end portion of the plug, if the drilling-tapping tool as well as the tubular milling cutter is lowered, the plug residue would be extracted from the heat transfer tube.

Also, in the apparatus according to the present invention, if the larger diameter section of the cotter type clamping mechanism is inserted into a normal heat transfer tube which does not contain a mechanical plug and a cotter can be radially expanded, the larger diameter section would come into press contact with the inner surface of the heat transfer tube, and the clamping mechanism and hence the plug removing apparatus become to be fixed.

In case where a plug has been secured in the heat transfer tube into which the cotter is planned to be inserted, the lifting distance of the cotter is adjusted by means of the stroke adjustment mechanism, and only the smaller diameter section of the cotter is inserted into the tube, namely a plug secured therein. Then, when the cotter is radially expanded, the smaller diameter section comes into press contact with the inner surface of the plug, and like the above-described case, the plug removing apparatus can be fixed.

The above-mentioned and other objects, features and advantages of the present invention will become more apparent by reference to the following description of one preferred embodiment of the invention taken in conjunction with the accompanying drawings.

BRIEF DESCRIPTION OF THE DRAWINGS:

In the accompanying drawings:
Fig. 1 is a perspective view showing the whole of a plug removing apparatus according to the present invention;
Fig. 2 is a plan view of the plug removing apparatus shown in Fig. 1;
Fig. 3 is a cross-section view taken along line A-A in Fig. 2 as viewed in the direction of arrows;
Fig. 4 is a cross-section view taken along line B-B in Fig. 3 as viewed in the direction of arrows;
Fig. 5 is a longitudinal cross-section view showing a clamping mechanism and a stroke adjustment mechanism used in the plug removing apparatus according to the present invention; and
Fig. 6 is a perspective view showing the whole of a cutting apparatus in the prior art to be used in cutting of a mechanical plug.

DESCRIPTION OF THE PREFERRED EMBODIMENT:

In the following, one preferred embodiment of the present invention will be described in detail with reference to the accompanying drawings.

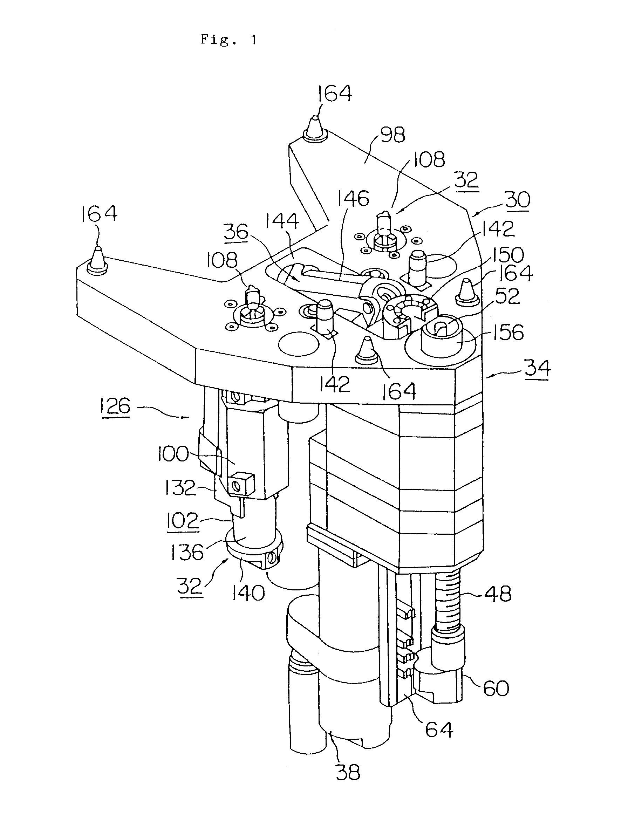

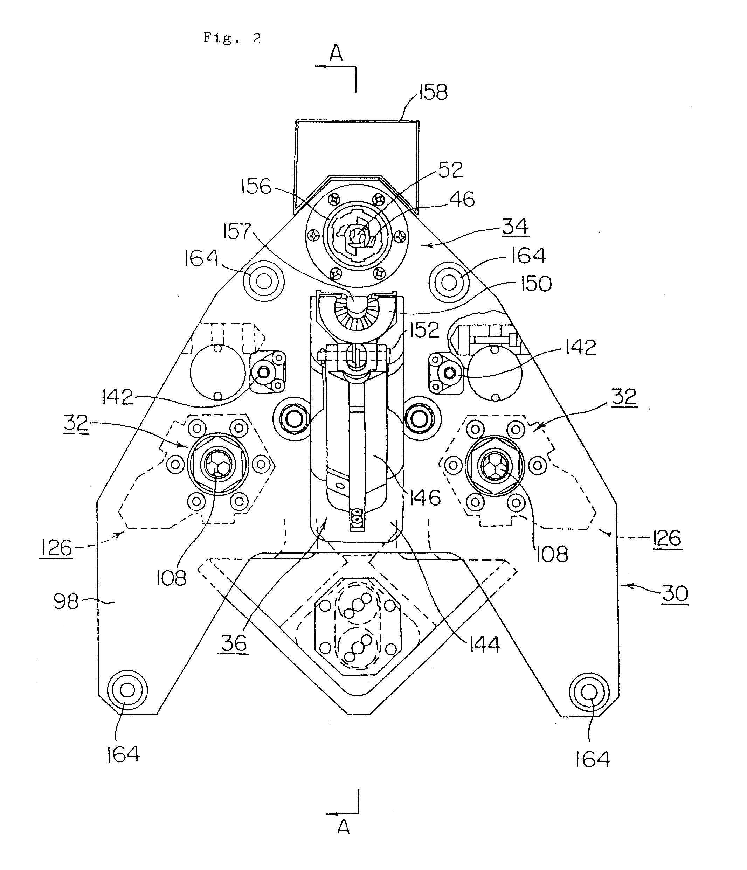

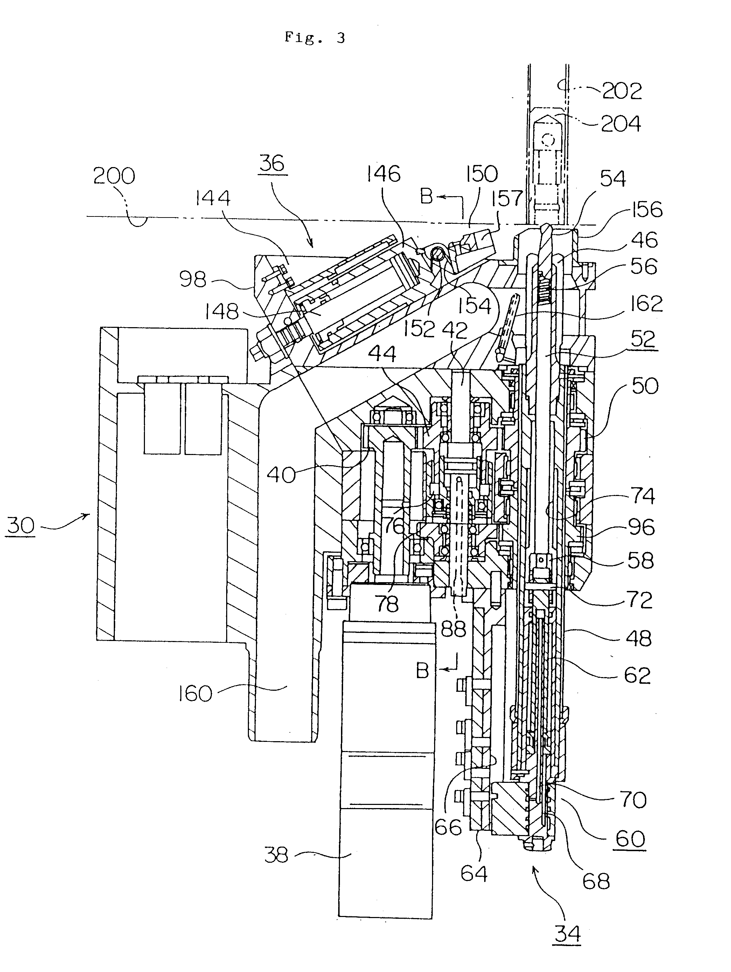

The whole of the plug removing apparatus according to the present invention is shown in perspective in Fig. 1, a plan view of the same being shown in Fig. 2, and a longitudinal cross-section view of the same taken along line A-A in Fig. 2 is shown in Fig. 3. This plug removing apparatus is provided with a main body 30, a clamping mechanism 32 for fixing the apparatus main body 30 at a desired position under a tube sheet 200 of a steam generator and a cutting and removing mechanism 34 for cutting and removing a plug 204 secured in a heat transfer tube 202. In order to move the plug removing apparatus by remote control within a lower water chamber of the steam generator, the apparatus main body 30 is mounted to a well-known walking type device (not shown) or the like. In addition, in the illustrated embodiment, the plug removing apparatus is provided with a plug residue collecting mechanism 36 for collecting a part of a plug 204 which is left after cutting the main part of plug, that is, a plug residue and a chip collecting mechanism.

At first, a description will be made on the cutting and removing mechanism 34. As clearly shown in Fig. 3, at the lower portion of the apparatus main body 30 is mounted an air motor 38 serving as a power source for the cutting and removing mechanism 34. A gear 40 at an output section of the air motor 38 is meshed with an idle gear 44 on an intermediate shaft 42 mounted vertically within the apparatus main body 30. In addition, at a corner portion of the apparatus main body 30 is vertically disposed a holder tube 48 for holding a milling cutter 46. Splines are formed on the outer surface of an upper portion of this holder tube 48, and the above-mentioned idle gear 44 is meshed with a gear 50 coupled on these splines.

Accordingly, when the air motor 38 is driven, the holder tube 48 is rotated via the idle gear 44 and the gear 50, but at this time, since the gear 50 and holder tube 48 are spline-coupled, the holder tube 48 can be also moved vertically.

At the tip end portion of the holder tube 48 is integrally and coaxially mounted a milling cutter 46 for performing main cutting, that is, boring into the plug. This milling cutter 46 has a central through-hole extending in the axial direction, and in this through-hole a drill-tap 52 is supported so as to be freely movable in the axial direction. The drill-tap 52 is a cutting tool having a drilling section 54 for drilling a prepared hole in the closed end portion of the plug and a tapping section 56 for tapping in the prepared hole machined by the drilling section 54, and the preparatory drilling and tapping can be performed successively thereby.

The lower end of the drill-tap 52 is connected via a rotary joint 58 to the top end of a vertical shaft 62 of a lifting mechanism 60 equipped at the lower portion within the holder tube 48. While this lifting mechanism 60 is adapted to move vertically with the holder tube 48, it cannot rotate as restrained by a guide groove 66 in a guide plate 64 mounted on the lower surface of the apparatus main body 30. The lifting mechanism 60 is of hydraulic cylinder type, and the vertical shaft 62 is adapted to rise when a hydraulic pressure is applied through a fluid inlet passage 68 and to fall when a hydraulic pressure is applied into a fluid inlet passage 70. At the top portion of the vertical shaft 62 is attached a pin 72 as penetrating laterally therethrough. When the vertical shaft 62 has been raised by a predetermined distance with respect to the holder tube 48, this pin 72 is meshed with a spindle key slot 74 formed on the inner surface of the holder tube 48, and thereby the drill-tap 52 can be rotated integrally with the holder tube 48.

On the other hand, the above-described intermediate shaft 42 is provided with a pneumatic clutch 76 and a brake gear 78.

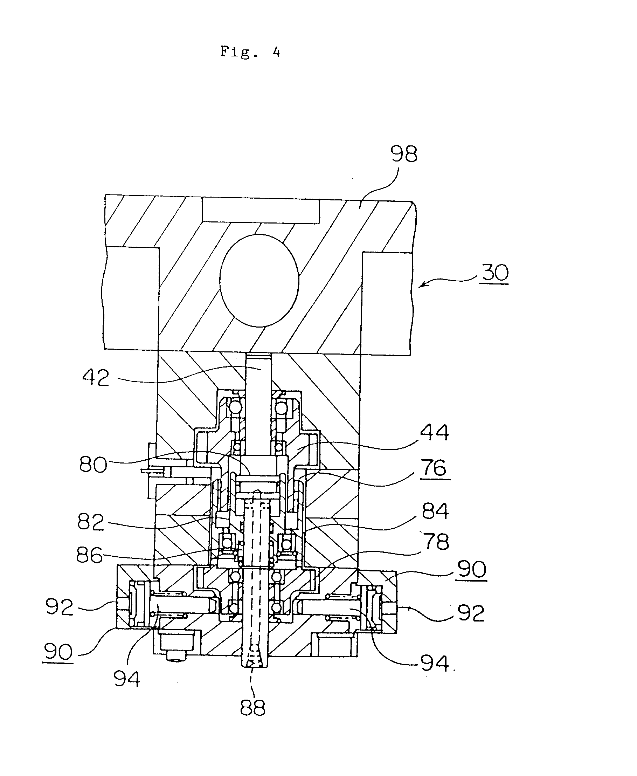

As clearly shown in Fig. 4, the clutch 76 is composed of a piston section 80 arranged near a middle portion of the intermediate shaft 42, a cylinder tube 82 slidably containing this piston section 80, and an outer tube 84 rotatably mounted around the circumference of the cylinder tube 82 and spline-coupled with the lower portion of the idle gear 44. At the lower edge portion of the outer tube 84 are formed a large number of teeth adapted to be meshed with teeth machined on the upper surface of the brake gear 78.

Normally, since the outer tube 84 is biased upwards jointly with the cylinder tube 82 by a spring 86 and it is separated from the brake gear 78, a torque of the idle gear 44 would not be transmitted to the brake gear 78. When compressed air is fed through an air inlet passage 88 formed in the intermediate shaft 42 into the cylinder tube 82 on the underside of the piston section 80, the outer tube 84 is lowered jointly with the cylinder tube 82, the teeth of the outer tube 84 are meshed with the teeth of the brake gear 78, and the torque transmitted from the idle gear 44 gets transmitted via the outer tube 84 to the brake gear 78.

At the circumference of the brake gear 78 are provided a pair of pneumatic brake cylinders 90 opposed to each other about the intermediate shaft 42, and provision is made such that when compressed air is fed into ports 92 of the respective brake cylinders 90, piston rods 94 extend and come into contact with the lower portion of the brake gear 78 to apply braking forces thereto, and the revolution of brake gear 78 gets stopped. Also, the brake gear 78 is meshed with a gear 96 surrounding the holder tube 48. On the inner surface of this gear 96 are formed threads and they are engaged with threads formed on the lower outer surface of the holder tube 48.

Accordingly, when a torque of the air motor 38 is transmitted to the gear 96 via the idle gear 44, the clutch 76 and the brake gear 78 by coupling the clutch 76 to the brake gear 78, the holder tube 48 is raised at a predetermined speed by the rotation of the gear 96, and so, the milling cutter 46 and the drill-tap 52 are also raised. In case of lowering the holder tube 48, the clutch 76 is disconnected and the brake gear 78 is locked by the brake cylinders 90. In this case, since the gear 96 becomes immovable, when the holder tube 48 is rotated in a reverse direction, the holder tube 48 would move downward in a manner known in a feeding mechanism of a lathe or the like.

Next, the clamping mechanism 32 will be explained hereinafter. As shown in Fig. 2, the clamping mechanisms 32 are disposed at two locations apart from the milling cutter 46, and in order that the plug removing apparatus can be supported effectively, they are positioned at such positions that the lines each connecting the center of each of the clamping mechanisms 32 with the center of the cutting tool 46 may form an angle of about 45 degrees. In addition, the clamping mechanisms 32 can be operated in an independent manner so that they can be appropriately adapted to the states of the heat transfer tubes at the clamping positions.

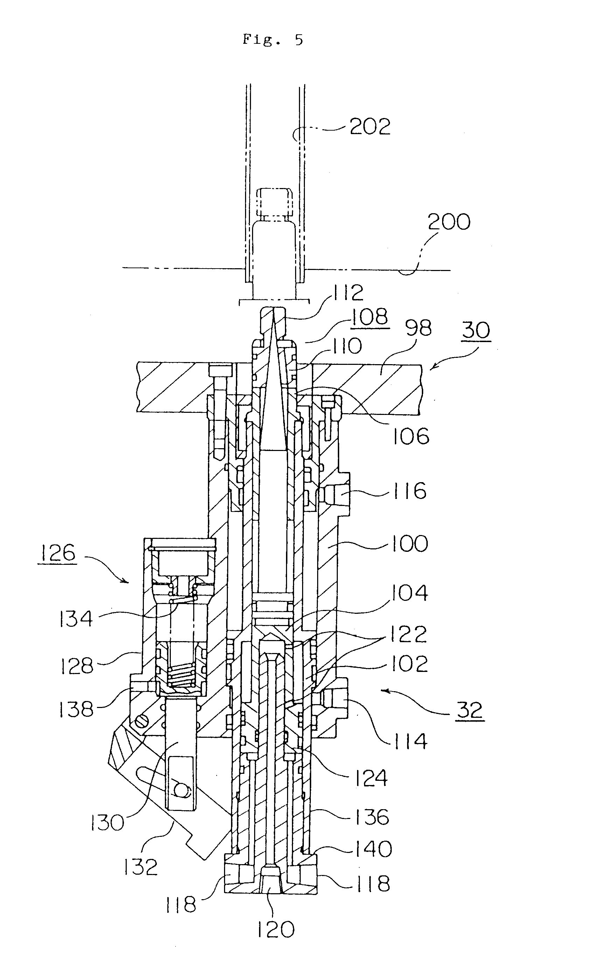

As clearly shown in Fig. 5, each of the clamping mechanisms 32 is of hydraulically driven cotter type, and it is principally composed of a cylinder tube 100 which extends vertically and is fixed to the lower surface of a top plate 98 of the apparatus main body 30, a piston cylinder 102 slidably put within the cylinder 100, a piston rod 104 slidably disposed within the piston 102, a guide tube 106 secured to the piston cylinder 102 for the purpose of guiding the piston rod 104, and a cotter 108 provided at the tip end of the guide tube 106. The cotter 108 has a larger diameter cotter section 110 to be brought into press contact with the inner surface of a heat transfer tube 102, and a smaller diameter cotter section 112 to be brought into press contact with the inner surface of a lower portion of a plug in the event that the plug is secured in the heat transfer tube 202.

When a hydraulic pressure is applied to a port 114 of the cylinder tube 100, then the piston cylinder 102 rises and the top portion of the piston cylinder 102 projects from the top surface of the apparatus main body 30, and when a hydraulic pressure is applied to a port 116, then the piston cylinder 102 lowers, and the state shown in Fig. 5 is recovered. Further, when a hydraulic pressure is applied to a port 118 in the piston cylinder 102, then the piston rod 104 rises with respect to the piston cylinder 102 and the tapered tip end portion of the piston rod 104 radially expands the cotters 108. When a hydraulic pressure is applied to a port 120, then the pressure in the cylinder chamber on the upper side of the piston portion 124 is increased under the influence via a through-hole 122 in the side wall of the piston rod 104, hence the piston rod 104 is lowered, and the cotters 108 are also closed.

In Fig. 5, reference numeral 126 designates a hydraulic stroke adjustment mechanism for adjusting the stroke of the piston cylinder 102. This stroke adjustment mechanism 126 has a cylinder tube 128 integrally formed on the side wall of the cylinder tube 100 of the clamping mechanism 32, a piston rod 130 extending downwards from the inside of this cylinder tube 128, and a forked stopper 132 pivotably supported on the cylinder tube 128 at its end and rotationally driven by the piston rod 130.

Usually, the piston rod 130 is pressed downwards by a spring 134, and so, the stopper 132 is separated from a lower extension 136 of the piston cylinder 102 extending downwards. When a hydraulic pressure is applied to a port 138 and the piston rod 104 is raised, then the forked tip end portion of the stopper 132 is placed at the side portion of the lower extension 136 of the piston cylinder 102. Under this condition, since a bottom flange 140 of the piston cylinder 102 comes into contact with the stopper 132, further rise of the piston cylinder 102 is prevented.

In case where the plug removing apparatus is fixed to the tube sheet 200 by making use of such clamping mechanism 32 and stroke adjustment mechanism 126, at first the entire apparatus is made to move by means of a walking type devoce (not shown) or the like so that the cotters 108 of the respective clamping mechanisms 32 may be positioned right under the heat transfer tubes 202 chosen as objects to be clamped (the state shown in Fig. 5).

Here it is assumed that one heat transfer tube 202 is normal one with no plug therein and the other is a heat transfer tube in which a plug is secured.

For the heat transfer tube 202 without a plug, the operational proceedings are advanced with the stroke adjustment mechanism 126 kept an OFF state shown in Fig. 5. Namely, when the piston cylinder 102 is raised up to the upper limit of the stroke by an application of pressure to the port 114 of the clamping mechanism 32, then the cotter 108 is inserted into the heat transfer tube 202 as shown by double-dot chain lines in Fig. 5. Subsequently, when a hydraulic pressure is applied through the port 118 to raise the piston rod 104, then the cotter 108 gets forcibly expanded outwards, and the larger diameter cotter section 110 of the cotter 108 is brought into press contact to the inner surface of the heat transfer tube 202.

On the other hand, for the heat transfer tube 202 with a plug secured, at first, the stroke adjustment mechanism 126 is actuated to place the stopper 132 of the adjustment mechanism at the side portion of the lower extension 136 of the piston cylinder 102. Under this condition, when the piston cylinder 102 is raised, the smaller diameter cotter section 112 is surely positioned at the lower portion of the inside of the plug without the fear that the tip end portion of the guide tube 106 and the larger diameter cotter section 110 may interfere with the bottom end of the plug, since the stroke is shortened by the stopper 132. And, when the cotter 108 is expanded in a similar manner to that described above, the smaller diameter cotter section 112 is brought into press contact to the inner surface of the plug.

When the two clamping mechanisms 32 are fixed to the heat transfer tube 202 and to the plug in the above-described manner, respectively, the plug removing apparatus becomes capable of withstand a reaction force during cutting, and vibration can be also prevented.

It is to be noted that as a matter of course, the plug removing apparatus can be fixed even in the case where both of the two heat transfer tubes 202 serving as objects for clamping have a plug secured. In addition, in the case where the end portion of the heat transfer tube 202 is subjected to sleeve-repairing or in the case where a welding plug is secured, it is only necessary to bring the smaller diameter cotter section 112 of the clamping mechanism 32 into press contact to the inner surface of the sleeve or the welding plug in a similar manner to the case of the mechanical plug.

The clamping mechanism 32 also has a function of vertically moving the plug removing apparatus. More particularly, after the cotter 108 is fixed to the heat transfer tube 202 or the plug, when the piston cylinder 102 is moved vertically with respect to the cylinder tube 100, the plug removing apparatus can be made to be closer to or away from the tube sheet 200. As shown in Figs. 1 and 2, limit switches 142 are provided on the top plate 98 of the apparatus main body 30, and thereby the interval between the plug removing apparatus and the tube sheet 200 can be properly set.

The plug piece collecting mechanism 36 is composed of a hydraulic cylinder mechanism, and it is disposed in a recess 144 formed in a central portion of the top plate 98. Describing it in a more detailed manner, the plug piece collecting mechanism 36 includes a cylinder tube 146 and a piston rod 148 provided within this cylinder tube 146, and an end of the piston rod 148 is fixed to the top plate 98. The cylinder tube 146 may be reciprocated in an upwardly inclined direction towards the axis of the cutting tool 46 by appropriately controlling the hydraulic pressure. At the cutter-side end portion of the cylinder tube 146, a U-shaped holding member 150 for holding a plug piece is attached by a pin 152 in a vertically swingable manner. This holding member 150 is kept in an inclined state by a torsion coil spring 154, and, when the cylinder tube 146 is brought close to the milling cutter 46, it swings downwards as guided by an outer edge of a cylindrical chip receiver 156 mounted on the top plate 98 and surrounding the milling cutter 46, thereby gets in a horizontal state above the chip receiver 156.

As will be described later, the plug residue extracted by means of the drill-tap 52 after cutting off the main body of plug, is held on a lock metal 157 on the upper surface of the holding member 150 above the chip receiver 156. After the drill-tap 52 has been disengaged from the plug residue, when the walking type device (not shown) or the like connected to the plug removing apparatus is inclined, the plug residue would fall into a collecting box 158 (Fig. 2) disposed at the side portion of the plug removing apparatus and it is thereby collected.

Finally, a chip collecting mechanism will be described hereafter. The chip collecting mechanism consists of a chip collecting chute 160 formed in the apparatus main body 30 and communicated to a chip suction device outside (not shown). This chip collecting chute 160 is communicated with a space defined under the chip receiver 156, and it is adapted to suck chips and the like produced by the use of the milling cutter 46 and the drill-tap 52 and to carry them to the outside by actuating the chip sucking device. It is to be noted that reference numeral 162 designates an air injection nozzle, which makes it possible to suck chips adhered to the inside of the apparatus by blowing air towards the milling cutter 46.

While it is expected that the operation of the plug removing apparatus according to the present invention will be generally appreciated by the above descriptions of the respective mechanisms, the following brief explanation will be made on the procedure of boring and removing a plug 204 blockading the heat transfer tube 202 with the plug removing apparatus illustrated.

At first, the entire apparatus is made to move by manipulating the walking type device to place the milling cutter 46 and the drill-tap 52 coaxially right under the plug 204 which is an object to be removed and also to dispose each of the clamping mechanisms right under the heat transfer tube 202 which is an object for clamping. Subsequently, the cotter 108 is brought into press contact with the heat transfer tube or the plug by hydraulically controlling the clamping mechanism 32 and, if necessary, the stroke adjustment mechanism 126 in the above-described manner, thereafter the apparatus main body 30 is raised to bring the projections 164 into contact with the lower surface of the tube sheet 200, and thereby the plug removing apparatus is firmly fixed.

At this time, the air motor 38 is rotated and the clutch 76 is connected to the brake gear 78, and then the holder tube 48 and the cutter 46 rise while rotating. Next, when the vertical shaft 62 of the lifting mechanism 60 is extended upwards, the drill-tap 52 also rotates and rises jointly with the holder tube 48, since the pin 72 is engaged with the spline key slots 74 within the holder tube 48. At this moment, since the feed velocity of the vertical shaft 62 is set faster than the feed velocity of the milling cutter 46, prior to the main cutting (i.e. boring) of the plug 204, formation of a prepared hole at the upper closed end portion of the plug 204 by means of the drill section 54 of the drill-tap 52 is commenced.

When the prepared hole was formed and eventually the tap section of the drill-tap 52 has been threadedly engaged with the upper end portion of the plug 204, then the vertical shaft 62 is disconnected from the rotary joint 58 at the lower end of the drill-tap 52, and only the vertical shaft 62 is lowered.

Thereafter, main cutting (i.e., boring) of the plug 204 is effected by rotating and raising the holder tube 48 and the milling cutter 46, and the portion of the plug 204 kept in tight contact with the heat transfer tube 202 as well as the cone are cut away. It is to be noted that chips produced by the cutting would fall in the chip receiver 156, and they are automatically discharged to the outside of the steam generator via the chip collecting chute 160 by the chip sucking device.

When the main cutting has been completed, the vertical shaft 62 is raised again to be connected with the drill-tap 52. Furthermore, the clutch 76 is disconnected from the brake gear 78, and also the brake gear 78 is locked by actuating the brake cylinders 90. And, when the air motor 38 is inversely rotated, the holder tube 48 moves downwards, as a result the plug residue threadedly engaged with the drill-tap 52 is extracted from the heat transfer tube 202, and it is received within the chip receiver 156.

After extraction of the plug residue, the apparatus main body 30 is downwardly separated from the tube sheet 200 by manipulating the clamping mechanism 32. Then, after the plug residue has been disposed above the chip receiver 156 by raising the vertical shaft 62 again, the holding member 150 is placed horizontally on the chip receiver 156 by actuating the plug collecting mechanism 36. Under this condition, when the vertical shaft 62 is lowered, the plug residue is held on the lock metal 157 of the holding member 150. At this time, when the drill-tap 52 is lowered while reversely rotating, the drill-tap 52 is disengaged from the plug residue, and when the plug cutting apparatus is appropriately inclined by tilting the walking type device, the plug residue falls into the collecting box 158 mounted externally and thereby it is collected. Finally, when the cotter 108 has been extracted from the heat transfer tube 202 by controlling the clamping mechanism 32, the plug removing work is completed.

Owing to the fact that the works as explained above are performed by remote control, it is desirable to attach a watching device such as an ITV device in the apparatus main body.

As will be apparent from the detailed description of one preferred embodiment above, according to the present invention, owing to the fact that a drill for forming a prepared hole and a tap for forming a threaded hole are integrated into a single cutting tool (drill-tap) and this drill-tap and a milling cutter are coaxially disposed and interlocked, a series of works including formation of a prepared hole in a plug, formation of a threaded hole, main cutting (boring) and extraction of the plug can be executed consecutively without exchange of tools at all. Accordingly, a working efficiency in removal of a plug is improved, the invention is also economically advantageous, and as a result of shortening of a working time, the invention contributes also to reduction of exposure to radiations.

In addition, owing to the fact that the cotter in the clamping mechanism is composed of two sections of large-diameter and smaller-diameter and a stroke adjustment mechanism is also included therein, the clamping mechanism is applicable not only to a heat transfer tube, but also to a plug or a sleeve secured in a heat transfer tube. Accordingly, in contrast to the fact that in the prior art, in which depending upon a clamping location, the work of changing the position of the clamping mechanism or adding another clamping mechanism was necessary, according to the present invention such work becomes unnecessary, and so, an applicable range of the apparatus according to the present invention can be broadened.

While a principle of the present invention has been described above in connection to one preferred embodiment of the invention, it is intended that all matter contained in the above description and illustrated in the accompanying drawings shall be interpreted to be illustrative and not as a limitation to the scope of the invention.

## Claims

1. An apparatus for removing a mechanical plug secured in an end of a heat transfer tube of a heat-exchanger, comprising a main body, a cotter type clamping mechanism for fixing the main body on a tube sheet of the heat-exchanger, and a cutting and removing mechanism for cutting and removing the mechanical plug, wherein said cutting and removing mechanism has a tubular milling cutter and a drilling-tapping tool coaxially arranged in the milling cutter and forming a drilling section at an end thereof and a tapping section adjacent to the drilling section.

2. An apparatus as defined in Claim 1, wherein said cotter type clamping mechanism includes a cotter having a smaller diameter section at an upper portion so as to be held in a mechanical plug other than said mechanical plug to be removed, and a larger diameter section at a lower portion so as to be held in a heat transfer tube adjacent to said heat transfer tube within which said mechanical plug to be removed is secured, and a stroke adjustment mechanism for selecting a lifting distance of the clamping mechanism.

Fig. 1

Fig. 2

Fig. 3

Fig. 4

Fig. 5

Fig. 6 (Prior Art)

European
Patent Office

**EUROPEAN SEARCH
REPORT**

Application Number

**EP 91 11 7154**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 185 427 (WESTINGHOUSE) <br> * page 2, line 15 - line 80; figures * * <br> – – – | 1 | B 23 P 19/02 <br> F 22 B 37/00 |
| A | DE-A-2 552 341 (FRAMATOME) <br> * figures 4,5 * * <br> – – – – – | 1,2 | |

|  | TECHNICAL FIELDS SEARCHED (Int. Cl.5) |
|---|---|
| | B 23 P <br> F 22 B <br> F 16 B |

The present search report has been drawn up for all claims

| Place of search | Date of completion of search | Examiner |
|---|---|---|
| The Hague | 07 January 92 | RIS M. |